# EUROPEAN PATENT SPECIFICATION

(11) **EP 4 302 973 B1**
(45) Date of publication and mention of the grant of the patent: **30.07.2025**
(21) Application number: 23178713.6
(22) Date of filing: 12.06.2023
(51) Int. Cl.: B29C 65/36, B29C 65/18, B29C 65/00, B65B 51/30

(54) **A SEALING JAW SYSTEM AND A METHOD FOR FORMING PACKAGING CONTAINERS BY USING A SEALING JAW SYSTEM**
SIEGELBACKENSYSTEM UND VERFAHREN ZUR HERSTELLUNG VON VERPACKUNGSBEHÄLTERN UNTER VERWENDUNG EINES SIEGELBACKENSYSTEMS
SYSTÈME DE MÂCHOIRES DE SCELLAGE ET PROCÉDÉ DE FORMATION DE RÉCIPIENTS D'EMBALLAGE À L'AIDE D'UN SYSTÈME DE MÂCHOIRES DE SCELLAGE

(30) Priority: 07.07.2022 EP 22183607
(43) Date of publication of application: 10.01.2024
(73) Proprietor: TETRA LAVAL HOLDINGS & FINANCE S.A., 1009 Pully (CH)
(72) Inventor: Mossberg, Ulf, 22186 Lund (SE); Hermodsson, Göran, 22186 Lund (SE); Liljenberg, Jimmy, 22186 Lund (SE)
(74) Representative: Tetra Pak Patent Attorneys

(56) References cited:
- EP-A1- 1 785 355
- EP-A1- 3 053 834

## Description

### Technical Field

The invention generally relates to a sealing jaw system for forming packaging containers from a tube-shaped packaging material moving in a longitudinal direction. More particularly, the sealing jaw system comprising a first sealing unit and a second sealing unit. The invention also relates to a method for forming packaging containers from a tube-shaped packaging material by using a sealing jaw system.

### Background Art

The packaging industry is constantly pushing to provide improved packaging for all types of products. Packages should be extremely cost effective, of high quality, and also aesthetically pleasing.

One great advance in cost effective packaging, especially for liquid food products, was made with the introduction of tube formed packages. Such packages are formed from a continuous web of packaging material that is folded along its longitudinal edges. The longitudinal edges are attached to one another, typically by a sealing process based on heating. By sealing the longitudinal edges of the web of packaging material, a continuous tube of packaging material is created. The tube is filled with whatever fluid or material it is to contain after which the tube is divided into packages by providing transversal seals to the tube, and cutting the transversally sealed tube into sections, where each cut section forms a package. The transversal seals are typically performed by applying heat, e.g. using induction heating, in order to seal the top and bottom ends of the package.

In this process of providing transversal seals, the web of packaging material is constantly running at high speed which means that all the steps of the sealing process have to be done on a moving object. For instance, the sealing operation takes some time and the sealing device doing this therefore has to move with the speed of the packaging material.

As the speed of the packaging material will directly affect the number of packages produced per time unit, the speed of the packaging material is preferably kept as high as possible. The speed of the packaging material is limited by tolerances and properties of the process in general. All components have to be tuned and in systems known in the art, this tuning is typically done manually and in many cases requires full or partial stop of production which is costly both with regards to production loss but also with regards to man hours.

Additional problems may also be associated with the process of providing transversal seals in high speed package producing machines. For example, it is desired to always have the transversal seals aligned with the printed décor of the packaging material. Although the décor is normally printed with extremely high accuracy, deviations may occur which means that the position of the transversal seals may drift with regards to the décor. One possible cause of such misalignment may be when two webs of packaging material are joined by a splice. In order to improve performance of the package producing machine, it has been suggested to provide register marks on the web of packaging material. These register marks have a well-defined position with regards to the décor (and possibly also to pre-applied crease lines in the web of packaging material). Instead of doing manual inspection of the produced packages with regards to its décor, it is possible to determine the position of the register mark and to adjust machine parameters accordingly, should there be any misalignment of any feature of the produced package.

Another problem that may be associated with existing package producing machines is the static size of the packages produced. If a machine operator would like to increase or decrease the size of the packages to be produced, which adjustment is normally performed by adjusting the pitch of sealing jaws used to provide the transversal seals to the filled tube of packaging material, this must be done by machine shut-down and manual adjustments to the sealing jaws. As some iterations are normally required, e.g. by inspecting the position of the register marks as explained above, normally it is not possible to do this without incurring substantial machine down time.

For these reasons, there is a demand for a sealing jaw system with improved flexibility for forming packaging containers with a desired design and size. There is also a demand for a sealing system with an improved capacity.

Related prior art is described in patent documents EP1785355A1 and EP3053834A1.

### Summary

It is an object to at least partly overcome one or more of the above-identified limitations of the prior art. In particular, it is an object to provide an adaptive sealing jaw system that may compensate for variations of the design of the packaging material and also allow for different sizes of the packaging containers without undue down-time. Another object is to provide a sealing jaw system with an improved flexibility. Another object is to provide a cost-efficient sealing jaw system.

Another object is to provide a sealing jaw system which facilitates an improved flow capacity both in terms of liquid food product and number of packages.

Another object is to provide a sealing jaw system which facilitates reduced waste packaging material.

According to a first aspect, it is provided a sealing jaw system for forming packaging containers from a tube-shaped packaging material moving in a longitudinal direction by providing transversal seals to the tube-shaped packaging material, the sealing jaw system comprising:
a first sealing unit and a second, opposite, sealing unit, wherein the first sealing unit and the second sealing unit are arranged such that a gap is formed therebetween, the gap extending along a height of the first sealing unit and the second sealing unit and being configured to receive the tube-shaped packaging material while being fed in the longitudinal direction, the gap comprising a sealing region in which the sealing jaw system is configured to provide the transversal seals,
each sealing unit comprising:
   an upper shaft and a lower shaft, wherein the upper shaft is driven by an associated motor and the lower shaft is driven by an associated motor;
   each shaft comprises a pair of drive pulleys connected to and configured to corotate with the shaft and three pairs of freely rotatable pulleys coaxially arranged with the shaft;
   a first pair of drive bands configured to be driven via the upper shaft by the associated motor and a second pair of drive bands configured to be driven via the lower shaft by the associated motor via the respective pair of drive pulleys, wherein each pair of drive bands is supported by a pair of freely rotatable pulleys of the other one of the upper and lower shafts, wherein each pair of drive bands comprises at least three sealing jaw units connected to the respective pair of drive bands and extending therebetween; and
   two pairs of driven bands supported by a respective pair of freely rotatable pulleys of each one of the upper shaft and the lower shaft, wherein each pair of the two pairs of driven bands comprises at least three sealing jaw units connected to the respective pair of driven bands and extending therebetween,
   wherein each sealing jaw unit comprises a sealing jaw and a coupling member for engaging the tube-shaped packaging material to provide the transversal seals,
   wherein each pair of driven bands are driven by a pair of drive bands of the opposite one of the first and second sealing units via a coupling action between a coupling member of a sealing jaw unit of the pair of driven bands and a coupling member of a sealing jaw unit of the pair of drive band.

Put differently, the sealing jaw system comprises four motors and four shafts, wherein each motor is configured to drive an associated shaft. The sealing jaw system comprises sixteen bands, i.e. eight pairs of bands. The sealing jaw system comprises 32 pulleys, four pairs of drive pulleys and twelve pairs of freely rotatable pulleys. This design is advantageous as it allows for the sealing jaw system to comprise four separate drives/transmissions in the same orbit/loop compared to conventional sealing jaw systems known in the art. By having a sealing jaw system with four separate drives/transmissions, it facilitates for a flexible and time-efficient sealing system.

Each band is configured to be supported by two pulleys, one of the associated upper shaft and one of the associated lower shaft such that each band forms a motion path. The sealing jaw units are each travelling along a respective motion path and are each configured to provide transversal seals to the moving tube-shaped packaging material. Such transversal seals are in practice provided to the moving tube-shaped packaging material by two sealing jaw units engaging the tube-shaped packaging material from opposite sides thereof. A movement speed of a sealing jaw unit associated with a drive band is controllable independently of a movement speed of a sealing jaw unit associated with another drive band. The sealing jaw units are preferably equally spaced apart along the length of the associated band. Once the sealing jaw units are travelling along the respective motion path, the sealing jaw units may travel through the sealing region in which the sealing jaw unit is configured to engage the tube-shaped packaging material such that the transversal seals are formed. The sealing jaw units having a sealing jaw which is engaging the tube-shaped packaging material in order to provide the transversal seals are in practice controlled to have the same speed as the tube-shaped packaging material. The sealing jaw units not having a sealing jaw engaging the tube-shaped packaging material may on the other hand be controlled to have a speed which is different from the speed as the tube-shaped packaging material. The sealing jaw units having sealing jaws engaging the tube-shaped packaging material in the sealing region may be referred to as leading sealing jaw units. The sealing jaw units having sealing jaws being the next sealing jaws entering the sealing region may be referred to as trailing sealing jaw units. This means that the speed of the leading sealing jaw unit may be controlled independently of the speed of the trailing sealing jaw unit. Having the next sealing jaw to engage the tube-shaped packaging material controllable independently of the sealing jaw currently engaging the tube-shaped packaging material makes it possible and moreover easy to adjust the pitch, i.e. the distance between the leading sealing jaw unit and the trailing sealing jaw unit. This because the leading sealing jaw unit and the trailing sealing jaw unit are driven by different bands. Preferably, every fourth sealing jaw unit is driven by the same band. It may be possible to determine where the décor of the packaging material is located and based on this, increase or decrease the speed of the trailing sealing jaw unit and thereby adapting the pitch.

This is further advantageous as it allows for a cost-efficient but also material-efficient sealing jaw system compared to sealing jaw systems known in the art. Hence, as the sealing jaw system enables for adjusting the pitch. It is thus possible to make use of the packaging material in an efficient way without the need of forming packaging containers in which the décor is present in an undesired way. This means that larger design correction steps may be made to each packaging container, which also gives a certain flexibility to the package volume by regulating the pitch.

This is yet further advantageous as it allows for reduced waste packaging material compared to conventional sealing jaw systems as the packaging container may be individually designed by regulating the pitch.

In this context, the gap extends along the height of the first and second sealing units seen along the longitudinal direction. Hence, the height of the gap is parallel with the longitudinal direction such that the gap is configured to receive the tube-shaped packaging material while being fed in the longitudinal direction.

In this context, the drive pulleys should be interpreted as a pulley which is connected to the associated shaft such that the pulley is configured to receive power from the associated motor, via the shaft. Thereby, the drive pulley is able to drive its associated drive band. Preferably, the drive pulleys are connected on to the associated shaft via a key joint. In this context, the freely rotatable pulleys should be interpreted as a pulley which is connected on to the associated shaft such that the freely rotatable pulley is not configured to receive power from the associated motor, via the shaft. Thereby, the freely rotatable pulley is not able to drive its associated driven band but merely to rotate with a speed defined by the speed of the driven band. Preferably, the freely rotatable pulleys are connected on to the shaft via bearings.

In this context, the coupling action should be interpreted as when a sealing jaw unit of the respective sealing unit enters the gap such that the coupling members of the respective sealing units engage with each other such that the coupling action occurs. The sealing jaw units of a drive band of one of the sealing units and the sealing jaw units of a driven band of the other sealing unit have to be sufficiently equally arranged along their respective motion path such that they may be able to engage when entering the gap. Hence, the coupling action is provided when two coupling members, one of each sealing unit, engage each other. Preferably, each coupling member comprises two portions that are located on a respective side of the sealing jaw. Thereby, each pair of driven bands may be driven by a pair of drive bands of the opposite one of the first and second sealing units via the coupling action between the two portions of a sealing jaw unit of the pair of driven bands and the two portions of a sealing jaw unit of the pair of drive band, respectively.

The sealing jaw system is yet further advantageous as it allows for a sealing jaw system having higher capacity compared to conventional sealing jaw systems. Preferably, the sealing jaw system may be able to run with a tube-shape packaging material speed up to 770 mm/s.

A coupling member of the sealing jaw unit of the pair of driven bands and a coupling member of the sealing jaw unit of the pair of drive bands form a pair of coupling members, wherein the pair of coupling members are configured to connect to each other when entering the gap and wherein the pair of coupling members is configured to disconnect from each other prior to leaving the gap so as to provide the coupling action along a portion of the gap, wherein a corresponding pair of trailing coupling members connects to each other prior to the pair of coupling members disconnect from each other.

This is advantageous as it allows for that at least one sealing jaw is engaging the tube-shaped packaging material to provide the transversal seals at all times. It should however be noted that at least one coupling action of each drive/transmission has to be provided at all times such that a continuous motion of the sealing jaw system is provided. In other words, at least one coupling action of each drive/transmission has to be provided at all times or else a driven band not having any sealing jaw unit taking part in a coupling action will loose its position and hence synchronization in relation to the drive band intended to drive the driven band via said coupling action.

The sealing region may extend along at least a portion of the gap. This is advantageous as it allows for the respective sealing jaw unit to provide the transversal seal once the sealing jaw unit is present in the sealing region. Preferably, the portion along which the sealing region extends is smaller/shorter than the height, i.e. the extension of the gap. This is advantageous as it allows for the respective sealing jaw to be present along the gap, and provide the coupling action between another sealing jaw, without necessarily providing the transversal seals. This is also advantageous in that the pitch may be adjusted while maintaining synchronization between a drive band and its associated driven band.

The pulleys of each pair of pulleys on each shaft may be arranged in opposite positions, in opposite directions of a center point of the shaft. The positions of the pulleys may differ from shaft to shaft in a specific pattern. Preferably, the pattern is repeated on every fourth shaft of a respective sealing unit. This is advantageous as it allows for that each drive band of the sealing jaw system is supported by a drive pulley such that the four transmissions are four separate transmissions which are separately driven by the respective motor. This is further advantageous as it allows for that each band is driven in any way, at all times, either by the associated motor or by a corresponding drive band via a corresponding coupling action.

Each pair of driven bands may be driven by a pair of drive bands of the other one of the first and second sealing units via two coupling actions between two coupling members of the first sealing unit and two coupling member of the second sealing unit, respectively. This is advantageous as it allows for an efficient sealing system. This is further advantageous as it allows for a stable and secure sealing jaw system.

The coupling member of a sealing jaw unit associated with a drive band may comprise a female coupling member and the coupling member of a sealing jaw unit associated with a driven band may comprise a male coupling member; or
the coupling member of a sealing jaw unit associated with a drive band comprising a male coupling member and the coupling member of a sealing jaw unit associated with a driven band comprises a female coupling member,
wherein the female coupling member may be configured to receive the corresponding male coupling member to thereby provide the coupling action.

This is advantageous as it allows for the coupling action to be provided in an easy and efficient way. This is further advantageous as it allows for that each pair of driven bands are driven by a pair of drive bands via the coupling action. When the female coupling member receives the corresponding male coupling member, the drive of one of the coupling member is transmitted to the other coupling member via the coupling action. This is further advantageous as it allows for the engagement of the coupling members at a wide range of angles.

The female coupling member may be formed with a circular portion or recess which is configured to receive the male coupling member. The male coupling member may take the form as a bowl-shaped portion configured to be received by the female coupling member. The skilled person would understand that this is just examples and the female and male coupling members may take any form suitable for the coupling action to be provided. For example, a coupling member may include a plurality of features configured the engage features of another coupling member. A coupling member may include a protruding feature, i.e. a male feature and a recessed feature, i.e. a female feature.

Each band may be provided with at least one protrusion and each pulley may be provided with at least one recess configured to engage a corresponding protrusion thereby keeping the band in position relative the pulley. This is advantageous as it allows to smoothly and accurately control the movement of the band. The carriers may be clamped onto an already tensioned band with the recesses of the pulley as fixtures. This is further advantageous as it allows for a precise and efficient controlling of the respective band such that the band is kept in position at all times.

Each band may have a round cross-section. The band with round cross-section may be formed by a round pre-tensioned polymer band, preferably round bands with a stainless steel or a polymer core. The band may be joined by ball shank joint to form a loop. The band may be a chain, timing belt or Miró drive. Upon the band has a round cross-section, it is preferably referred to as a Miró drive. The Miró drive is advantageous as it allows for the length of the band to remain the same although the tension goes down. The transmission may moreover be clean, precise and silent.

The sealing jaw system may have exactly four motors configured to drive the upper shafts and the lower shafts of the first and second sealing units. This is advantageous as it allows for a sealing jaw system to comprise four separate drives/transmissions as discussed further above.

Each motor of the sealing jaw system may be configured to be independently controlled. This is advantageous as it allows for the respective drive/transmission to be independently controlled. This is further advantageous as it allows for, when the sealing jaw unit of a band is travelling outside the sealing region, the speed of the drive/transmission may be varied in relation to the speed of the tube-shaped packaging material such that the pitch may be adapted. The motors are preferably servo motors. Having the bands driven by servo motors is advantageous as it allows for accurate and controlled movement of each band.

The sealing jaw system may be configured to set a movement speed in the longitudinal direction of a sealing jaw unit, which is present in the sealing region, equal to a movement speed in the longitudinal direction of the tube-shaped packaging material. This is, as already discussed, advantageous as it allows for the transversal seals to be provided in an easy, precise and efficient way.

The sealing jaw system may comprise at least one sensor means arranged to detect data relating to a movement of the tube-shaped packaging material in the longitudinal direction, and wherein a movement speed of a trailing sealing jaw unit is controlled based at least partly on the detected data by an associated motor. This has proven to be very advantageous as parameters relating to the moving tube-shaped packaging material may be changing during operation and this enables the sealing jaw system to adapt in real time by detecting these changes.

The sensor means may be arranged to detect register marks on the moving tube-shaped packaging material, wherein each detected register mark corresponds to a defined position on a corresponding packaging container. This is advantageous since sensor marks make it easier to determine parameters, e.g. speed, position etc., relating to the moving tube-shaped packaging material.

The sealing jaw system may comprise at least one control module operatively connected to the sensor means and configured to control the movement speed of the trailing sealing jaw unit, by controlling the associated motor, such that the trailing sealing jaw unit will engage the tube-shaped packaging material at a predetermined or configurable position. This enables the trailing sealing jaw to engage the tube-shaped packaging material at the desired position with increased accuracy, which increases the yield, the quality of the product and reduces wasted packaging material.

According to a second aspect, it is provided a method for forming packaging containers from a tube-shaped packaging material by using a sealing jaw system according to any one of the preceding claims, the method comprising:
feeding the tube-shaped packaging material in the longitudinal direction through the gap of the sealing jaw system; and
providing a transversal seal to the tube-shaped packaging material by driving a sealing jaw of a first sealing jaw unit associated with the first sealing unit to engage the tube-shaped packaging material on a first side thereof and a sealing jaw of a second sealing jaw unit associated with the second sealing unit to engage the tube-shaped packaging material on a corresponding location of a second side thereof such that the transversal seal is formed between the sealing jaws,
wherein the first sealing jaw unit is associated with a pair of drive bands and the second sealing jaw unit is associated with a pair of driven bands which are driven by the pair of drive bands associated with the first sealing jaw unit via the coupling members of the first sealing jaw unit and the second sealing jaw unit.

Effects and features of the second aspect is largely analogous to those described above in connection with the first aspect.

Still other objectives, features, aspects and advantages will appear from the following detailed description as well as from the drawings.

### Brief Description of the Drawings

Embodiments will now be described, by way of example, with reference to the accompanying schematic drawings, in which
Fig. 1 is a schematic view of view of a sealing jaw system according to the disclosure.
Fig. 2 is a is a perspective view of a sealing jaw system according to the disclosure.
Fig. 3 is a partial side view of a sealing jaw system of Fig. 2 according to the disclosure.
Fig. 4 is a cross-sectional view of a drive shaft of a sealing jaw system according to the disclosure.
Figs. 5a-b are cross-sectional side views of a sealing jaw system according to the disclosure.
Figs. 6a-d are cross-sectional side views of a sealing jaw system according to the disclosure.
Fig. 7 is a flowchart illustrating steps of a method for forming packaging containers from a tube-shaped packaging material by using a sealing jaw system according to the disclosure.

### Detailed description

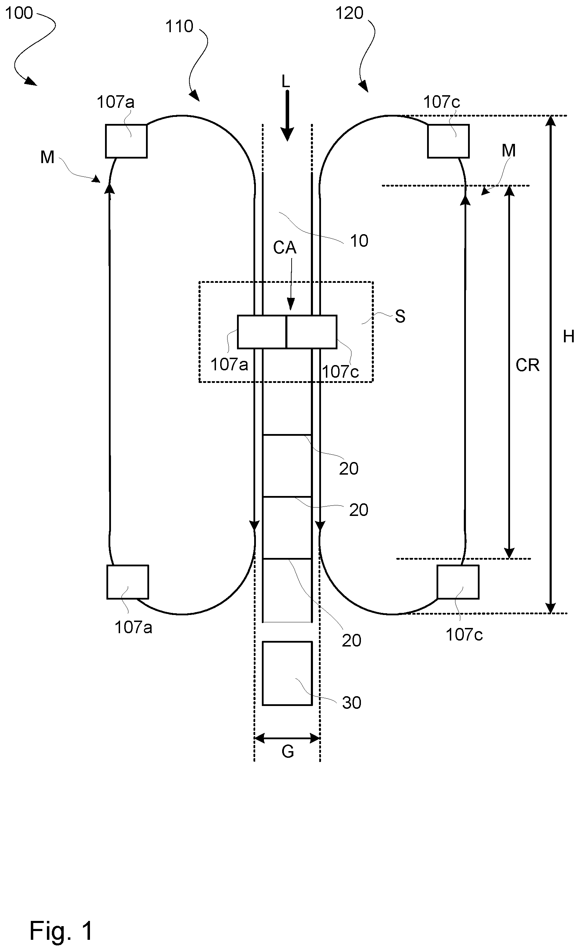

With reference to figure 1, a side view of a sealing jaw system 100 for forming packaging containers 30 is illustrated by way of example. The packaging containers 30 are formed from a tube-shaped packaging material 10 moving in a longitudinal direction L by providing transversal seals 20 to the tube-shaped packaging material 10. The tube-shaped packaging material 10 is preferably formed from a continuous web of packaging material that is folded along its longitudinal edges. The longitudinal edges are attached to one another, typically by a sealing process based on heating. The process of creating the tube-shaped packaging material 10 is not important for the enablement of the present disclosure. However, in a preferred embodiment, the tube-shaped packaging material 10 is a tube-shaped packaging material 10 that is suitable for obtaining transversal seals by inductive heating.

The sealing jaw system 100 comprises a first sealing unit 110 and a second, opposite, sealing unit 120. Preferably, the first and second sealing units 110, 120 are mirrored sealing units. The first sealing jaw unit 110 and the second sealing jaw unit 120 are arranged such as a gap G is formed therebetween. The gap G typically extends along a height H of the first and second sealing units 110, 120. The tube-shaped packaging material 10 is configured to be fed through the gap G in the longitudinal direction L.

The gap G comprises a sealing region S in which the sealing jaw system 100 is configured to provide the transversal seals 20. The sealing region S extends along a portion of the G. The portion in which the sealing region S extends is smaller than the height H of the gap G.

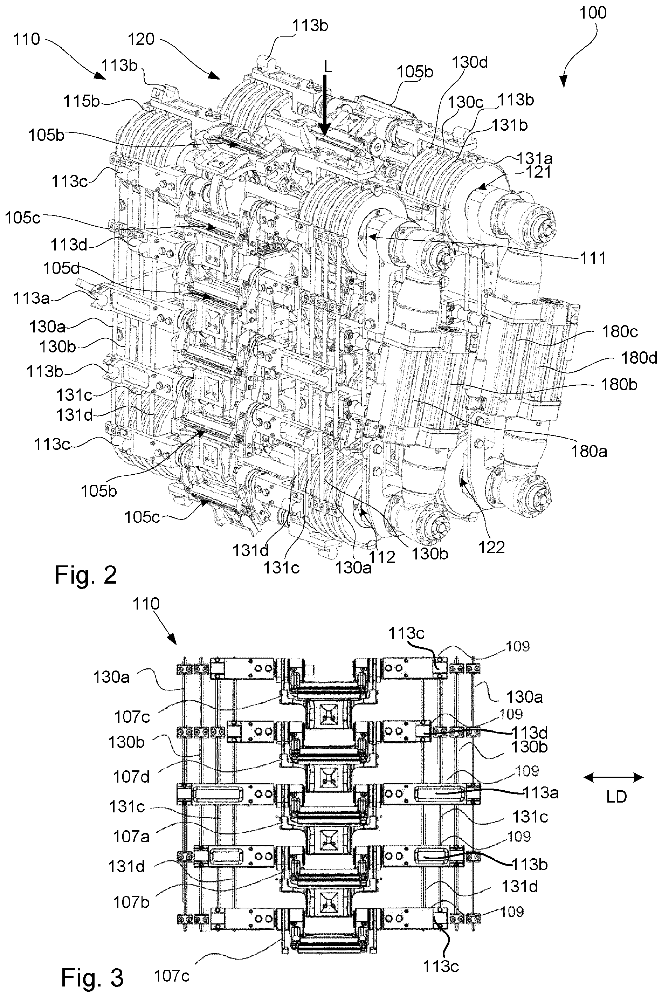

The first and second sealing units 110, 120 comprises a plurality of sealing jaw units 107a, 107b, 107c, 107d, which will be further discussed in connection with figures 2-6. However, as the sealing jaw system 100 depicted in figure 1 is a side view of the sealing jaw system 100, figure 1 showing only parts of the sealing jaw units 107a, 107c comprised in the sealing jaw system 100. Hence, as illustrated in figure 1, the first and second sealing units 110, 120 comprises three sealing jaw units 107a, 107c. Preferably, although not illustrated, each sealing unit 110, 120 comprises twelve sealing jaw units 107a, 107b, 107c, 107d. Any number of sealing jaw units 107a, 107b, 107c, 107d may however be used to advantage. The sealing jaw units 107a, 107b, 107c, 107d are travelling along a motion path M that is partly parallel to, and partly in the same direction as the longitudinal direction L as will be explained further below. The gap G is present at a portion of the motion path M. The sealing jaw units 107a, 107b, 107c, 107d are configured to provide the transversal seals 20 by engagement with the moving tube-shaped packaging material 10. Further, at the gap G, the motion path M is parallel to the longitudinal direction L. These transversal seals 20 may be formed by e.g. inductive heating and this means that the sealing jaw units 107a, 107b, 107c, 107d may have to engage the moving packaging material 10 for a period of time in order to form a high quality transversal seal 20. As induction heating sealing units are well known in the art, the exact configuration of the sealing units required for generating the induction heating of the packaging material will not be described further herein. In order to keep the packaging material 10 moving, the sealing jaw units 107a, 107b, 107c, 107d which are engaging the tube-shaped packaging material 10 are in practice moving at the same speed as the moving packaging material 10 along the longitudinal direction L. The sealing jaw units 107a, 107b, 107c, 107d will be further discussed in connection with figures 2-6.

The gap G further comprises a coupling region CR in which two corresponding sealing jaw units 107a, 107b, 107c, 107d, one of each sealing unit 110, 120, are configured to provide a coupling action CA. In short, the coupling action is provided when two corresponding sealing jaw units 107a, 107b, 107c, 107d engage with each other. This will be discussed in more detail further below. The coupling region CR extends along a portion of the gap G. The portion along which the coupling region CR extends is smaller than the height H of the gap G. The portion along which the coupling region CR extends is greater than the portion along which the sealing region S extends.

Downstream the sealing region S, the moving tube-shaped packaging material 10 is cut into packaging containers 30 along the area of transversal seals 20 by a cutting means (not illustrated). The cutting means may be formed as part of the sealing jaw system 100 but is preferably provided as a separate arrangement downstream the sealing jaw system 100.

With reference to figure 2, the sealing jaw system 100 as introduced in connection with figure 1 is illustrated in more detail to further explain the inventive concept of the present disclosure. As already introduced in figure 1, the sealing jaw system 100 comprises the first sealing unit 110 and the second, opposite, sealing unit 120. The longitudinal direction L is arranged between the sealing units 110, 120. The sealing region S of the motion path M is arranged between the sealing units 110, 120 and is not visible in figure 2.

Each sealing unit 110, 120 comprises an upper shaft 111, 121 and a lower shaft 112, 122. Each sealing unit 110, 120 comprises two motors 180a, 180b, 180c, 180d, one referred to as an upper motor 180a, 180c and one referred to as a lower motor 180b, 180d. The upper motors 180a, 180c are configured to drive a corresponding upper shaft 111, 121. The lower motors 180b, 180d are configured to drive a corresponding lower shaft 112, 122. As depicted in figure 2, the upper motor 180a of the first sealing unit 110 is configured to drive the upper shaft 111 of the first sealing unit 110 and the lower motor 180b of the first sealing unit 110 is configured to drive the lower shaft 112 of the first sealing unit 110. As further depicted in figure 2, the upper motor 180c of the second sealing unit 120 is configured to drive the upper shaft 121 of the second sealing unit 120 and the lower motor 180d of the second sealing unit 120 is configured to drive the lower shaft 122 of the second sealing unit 120.

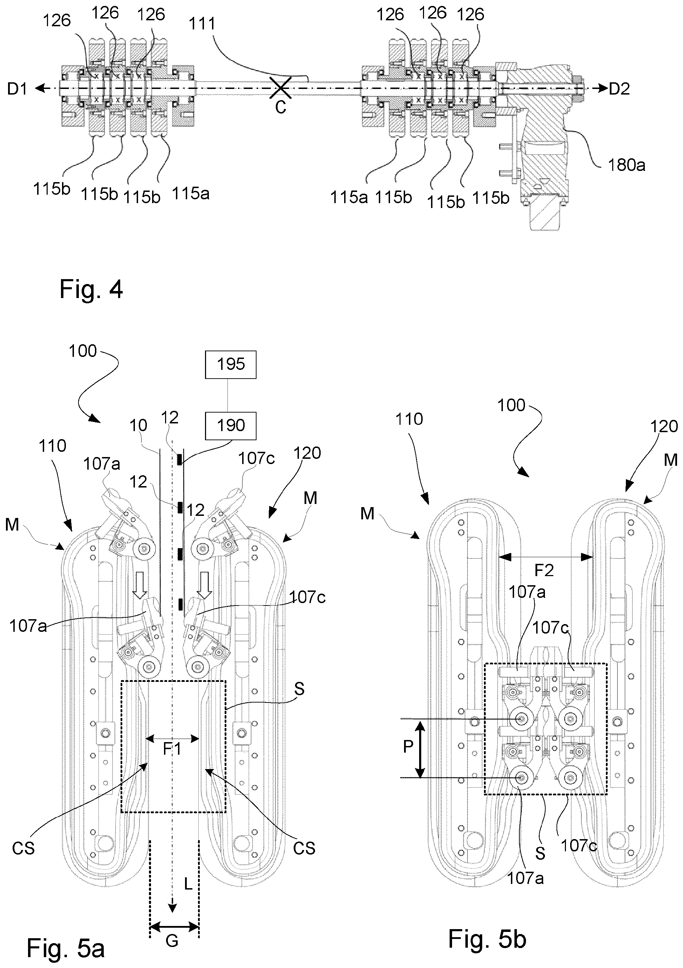

As best illustrated in figure 4, the upper shaft 111 of the first sealing unit 110 comprises a pair of drive pulleys 115a. The drive pulleys 115a are connected to and configured to corotate with the corresponding shaft 111. The upper shaft 111 further comprises three pairs of freely rotated pulleys 115b. The freely rotatable pulleys 115b are coaxially arranged with the corresponding shaft 111. However, the skilled person would understand that each shaft 111, 112, 121, 122 comprises a pair of corresponding drive pulleys 115a although not illustrated in the figures. Also in this case, the drive pulleys 115a are connected to and configured to corotate with a corresponding shaft 111, 112, 121, 122. Also in this case, each shaft 111, 112, 121, 122 further comprises three pairs of freely rotatable pulleys 115b. Also in this case, the freely rotating pulleys 115b are coaxially arranged with the corresponding shaft 111, 112, 121, 122.

As described above, the shaft 111 comprises the pair of drive pulleys 115a and three pairs of freely rotatable pulleys 115b. The pulleys of each pair of pulleys 115a, 115b on the upper shaft 111are arranged in opposite positions, in opposite directions D1, D2 of a center point C of the upper shaft 111. Put differently, respective drive pulley 115a is arranged on opposite sides of the center point C. In figure 4, the drive pulley 115a arranged to the left of the center point C is arranged at a fourth position seen from the left (at a first position seen from the right) and the drive pulley 115a arranged to the right of the center point C is arranged at a first position seen from the left (at a fourth position seen from the right). Each pair of freely rotatable pulleys 115b is arranged in the similar way as the drive pulley 115a, being positioned at the same distance from the center point C but in opposite directions. It should be noted that the position of the drive pulleys 115a is typically changed according to a predefined pattern from shaft 111, 112, 121, 122 to shaft 111, 112, 121, 122.

The drive pulleys 115a are preferably connected on to the shaft 111 via a key joint (not illustrated) and the freely rotatable pulleys 115b are preferably connected on to the shaft 111 via bearings 126.

Referring back to figure 2, each sealing unit 110, 120 further comprises two pairs of drive bands 130a, 130b, 130c, 130d. The drive bands 130a, 130b, 130c, 130d are configured to be driven via the associated shaft 111, 112, 121, 122 by the associated motor 180a, 180b, 180c, 180d via the respective pair of drive pulleys 115a. In addition, each pair of drive bands 130a 130b, 130c, 130d is supported by a pair of freely rotated pulleys 115b of the other one of the upper and lower shafts 111, 112, 121, 122. Hence, each drive band 130a, 130b, 130c, 130d is typically engaged by two pulleys, one drive pulley 115a and one freely rotated pulley 115b. Further, each sealing unit 110, 120 comprises two pairs of driven bands 131a, 131b, 131c, 131d. The driven bands 131a, 131b, 131c, 131d are supported by a respective pair of freely rotatable pulleys 115b of each of the upper shaft 111, 121 and the lower shaft 112, 122. Hence, each pair of bands 130a 130b, 130c, 130d, 131a, 131b, 131c, 131d is typically engaged by two pulleys 115a, 115b, either one drive pulley 115a and one freely rotatable pulley 115b or two freely rotatable pulleys 115b. Hence, each pair of bands 130a 130b, 130c, 130d, 131a, 131b, 131c, 131d defines the motion path M, wherein the motion path M is the corresponding for each band.

As introduced in figure 1, the sealing units 110, 120 comprises a plurality of sealing jaw units 107a, 107b, 107c, 107d. Preferably, each pair of bands 130a 130b, 130c, 130d, 131a, 131b, 131c, 131d comprises at least three sealing jaw units 107a, 107b, 107c, 107d connected to the respective band of the pair of bands 130a 130b, 130c, 130d, 131a, 131b, 131c, 131d. As best illustrated in figure 3, the sealing jaw units 107a, 107b, 107c, 107d are connected to a respective pair of bands 130a 130b, 130c, 130d, 131a, 131b, 131c, 131d and extending therebetween.

Referring back to figure 2, each sealing jaw unit 107a, 107b, 107c, 107d comprises a sealing jaw 105a, 105b, 105c, 105d and a coupling member 113a, 113b, 113c, 113d. The sealing jaw 105a, 105b, 105c, 105d is configured to engage the tube-shaped packaging material 10 to provide the transversal seals 20. Throughout the application text, the sealing jaw units 107a, 107b, 107c, 107d are configured to provide the transversal seals 20. However, in a more detailed discussion, the sealing jaws 105a, 105b, 105c, 105d of the sealing jaw units 107a, 107b, 107c, 107d are configured to provide the transversal seals 20. Hence, it should be clear for the skilled person that although it is referred to that the sealing jaw units 107a, 107b, 107c, 107d or the sealing jaws 105a, 105b, 105c, 105d are configured to provide the transversal seals 20, it is the same transversal seals 20 it is referred to.

As best illustrated in figure 5b, the coupling action is provided between a coupling member 113a, 113b, 113c, 113d of a sealing jaw unit 107a, 107b, 107c, 107d of the pair of driven bands 131a, 131b, 131c, 131d and a coupling member 113a, 113b, 113c, 113d of a sealing jaw unit 107a, 107b, 107c, 107d of the pair of drive band 130a, 130b, 130c, 130d. Thereby, each pair of driven bands 131a, 131b, 131c, 131d are driven by a pair of drive bands 130a, 130b, 130c, 130d of the opposite one of the first and second sealing units 110, 120 via the coupling action CA.

With reference to figure 3, the first sealing unit 110 of the sealing jaw system 100 of figure 2 is illustrated in further detail. At each lateral side and substantially perpendicular to the motion path M of the sealing jaw units 107a, 107b, 107c, 107d, four bands 130a, 13b, 131c, 131d are arranged separated in a lateral direction LD and in parallel with each other. As seen in Fig. 3, each sealing jaw unit 107a, 107b, 107c, 107d comprises attachment portions 109 extending substantially perpendicular to the motion path M. The sealing jaw unit 107a, 107b, 107c, 107d in Fig. 3 are illustrated as having attachment portions 109 at each horizontal end. This is a preferred design providing added stability and control. However, the attachment portions 109 may very well only be provided at one end of the sealing jaw unit 107a, 107b, 107c, 107d. In Fig. 3, five sealing jaw units 107a, 107b, 107c, 107d are visible, arranged vertically along the motion path M. Each of the sealing jaw units 107a, 107b, 107c, 107d is provided with attachment means 109 configured to have one of four different lengths. Each of the lengths of the attachments means 109 is adapted to match a distance from the sealing jaw unit 107a, 107b, 107c, 107d to an associated band 130a, 130b, 130c, 130d such that each sealing jaw unit 107a, 107b, 107c, 107d is attached to an associated band 130a, 130b, 130c, 130d on either side thereof.

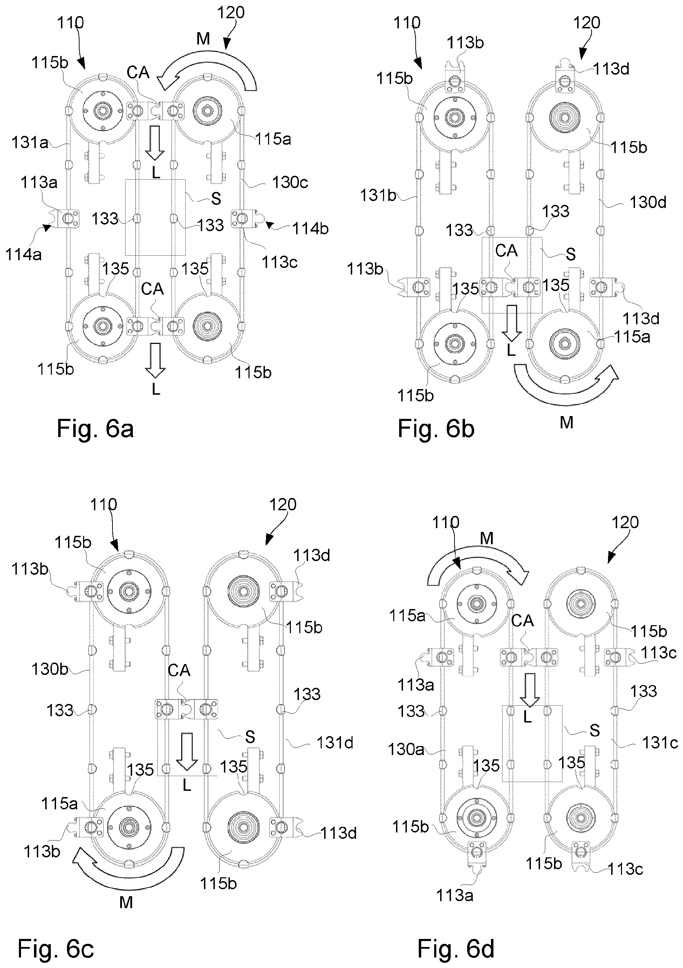

With reference to Figs. 5a-b, more details will be given relating to the motion path M of the sealing jaw units 107a, 107b, 107c, 107d. Figs. 5a-b is a side view of the sealing jaw system 100. Starting from Fig. 5a, and as discussed above, in order to achieve the transversal seals 20, each sealing jaw unit 107a, 107b, 107c, 107d is both moving along the motion path M but on opposite sealing units 110, 120. The motion path M may, as illustrated in Figs. 5a-b, be formed as a cam surface CS engaging each sealing jaw unit 107a, 107b, 107c, 107d to guide it along the motion path M. The cam surface CS preferably forms a curvature along at least a portion of the motion path M. As explained earlier, the sealing jaw system 100 comprises two opposite sealing units 110, 120, each comprising a motion path M running parallel to the longitudinal direction L at the sealing portion S. The transversal seal 20 is, as mentioned earlier, formed at the sealing portion S of the motion path M. The sealing portion S may, as illustrated in Figs. 5a-b be provided by having a reduced distance F1 between the respective motions paths M at the sealing portion S compared to the distance F2 between the respective motion paths M outside the sealing portion S, along the gap G. This is visualized in Figs. 6b-c wherein in Fig. 5a, no visible sealing jaw units 107a, 107b, 107c, 107d is in engagement with the tube-shaped packaging material 10, i.e. no sealing jaw units 107a, 107b, 107c, 107d are in the sealing portion S of the motion path M. Note that this is an illustrative example only, typically at least one sealing jaw units 107a, 107b, 107c, 107d is in engagement with the tube-formed packaging material 10 at all times. In Fig. 5b, four sealing jaw units 107a, 107c are within the sealing portion S of the motion path M and the cam surface of the motion path M is formed such that each sealing jaw unit 107a, 107c is tilted to engage the tube-formed packaging material 10. The distance between two consecutive sealing jaw units 107a, 107c at the sealing portion S is the same as the distance between two consecutive transversal seals 20 and is referred to as pitch P.

Referring back to figure 5a, the sealing jaw system 100 comprising at least one sensor means 195 arranged to detect data relating to a movement of the tube-shaped packaging material 10 in the longitudinal direction L. A movement speed of a trailing sealing jaw unit, being the second sealing jaw units 107a, 107c as seen along the longitudinal direction L, is controlled based at least partly on the detected data by an associated motor 180a, 180b, 180c, 180d. The sensor means 195 is arranged to detect register marks 12 on the moving tube-shaped packaging material 10, wherein each detected register mark 12 corresponds to a defined position on a corresponding packaging container 30.

The sealing jaw system 100 further comprising at least one control module 190 operatively connected to the sensor means 195 and configured to control the movement speed of the trailing sealing jaw unit. This is provided by controlling the associated motor, such that the trailing sealing jaw unit will engage the tube-shaped packaging material 10 at a predetermined or configurable position.

With reference to Figs. 6a-d, the transferal of movement and the timing of the sealing jaw units 107a, 107b, 107c, 107d on different pairs of bands 130a, 130b, 130c, 130d, 131a, 131b, 131c, 131d will be explained. Each of Figs. 6a-6d is a schematic cross-sectional side view of the sealing jaw system 100 of Fig. 2 taken at the same point in time but showing only sealing jaw units 107a, 107b, 107c, 107d of pairs of bands 130a, 130b, 130c, 130d, 131a, 131b, 131c, 131d driven by a specific motor (not included in the figures 6a-d). Fig. 6a illustrates two pair of bands 130c, 131a of the respective sealing unit 110, 120 and their corresponding sealing jaw units 107a, 107c. For illustrative purposes, only the pair of bands which are relevant for the specific transmission of each figure are illustrated in the respective figures 6a-d. Thus, figure 6b-d illustrated different pair of bands compared to figure 6a. Each of the cross-sections is taken at a cut of the different drive pulleys 115a such that each figures 6a-d shows the motion path M of the two bands 130a, 130b, 130c, 130d, 131a, 131b, 131c, 131d at opposite sides of the moving packaging material 10 (not shown in figures 6a-d) controlled from each motor 180a, 180b, 180c, 180d. Due to the perspective of figures 6a-d, the sealing jaw units 107a, 107b, 107c, 107d are not visible, but from Fig. 3 it is clear how they are attached to the respective pair of bands 130a, 130b, 130c, 130d, 131a, 131b, 131c, 131d. Each of the pair of bands 130a, 130b, 130c, 130d, 131a, 131b, 131c, 131d is provided with at least one coupling member 113a, 113b, 113c, 113d. The coupling member 113a, 113b, 113c, 113d on one pairs of bands 130a, 130b, 130c, 130d are formed to engage with corresponding coupling member 113a, 113b, 113c, 113d at the associated pair of bands 131a, 131b, 131c, 131d at the opposite side of the tube-shaped packaging material 10. By arranging a plurality coupling member 113a, 113b, 113c, 113d at suitable distances, at least one coupling member 113a, 113b, 113c, 113d will be in engagement with the corresponding coupling member 113a, 113b, 113c, 113d at the opposite side of the tube-shaped packaging material 10. Thereby, the coupling action CA is provided. This means that two associated bands 130a, 130b, 130c, 130d, 131a, 131b, 131c, 131d are always in connection via a coupling action such that the motor 180a, 180b, 180c, 180d controls rotation of the associated shaft 111, 112, 121, 122 which is transferred to the associated drive pulley(s) 115a and further to the drive band 130a, 130b, 130c, 130d engaging the drive pulley 115a. The drive band 130a, 130b, 130c, 130d engaging the drive pulley 115a transfers its movement to the associated driven band 131a, 131b, 131c, 131d engaging a freely rotatable pulley 115b by means of the coupling members 113a, 113b, 113c, 113d. The coupling members 113a, 113b, 113c, 113d may be formed with any suitable shape but is preferably formed as shown in figures 6a-d with one coupling member 113a, 113b, 113c, 113d having a circular portion for engagement with a bowl-shaped portion of a corresponding coupling member 113a, 113b, 113c, 113d at the opposite side of the moving tube-shaped packaging material 10. This shape is beneficial since it allows for the engagement of the coupling members 113a, 113b, 113c, 113d at a wide range of angles.

In the embodiment shown in Fig. 2, the coupling members 113a, 113b, 113c, 113d are located at each attachment means 109 of the sealing jaw units 107a, 107b, 107c, 107d. This means that, in figures 6a-d, each motor 180a, 180b, 180c, 180d is associated with three sealing jaw units 107a, 107b, 107c, and the sealing jaw system 100 comprises twelve sealing jaw units 107a, 107b, 107c. Preferably, all sealing jaw units 107a, 107b, 107c, 107d associated with a particular motor 180a, 180b, 180c, 180d are equally spaced apart along the length of the associated band 130a, 130b, 130c, 130d, 131a, 131b, 131c, 131d.

Throughout the figures 6a-6d, the sealing jaw unit is not visible but only the coupling member 113a, 113b, 113c, 113d of the associated sealing jaw unit.

In Fig. 6a the drive pulley 115a controlling the motion of the coupling members 113a, 113c and corresponding sealing jaw units is the upper right pulley 115a. This means that the motor controlling the upper right drive shaft controls the movement speed of the sealing jaw units on the bands 130c, 131a in Fig. 6a. Put differently, the driven band 131a of the first sealing unit 110 is driven by the drive band 130c of the second sealing unit 120 via the coupling action CA between the coupling member 113c of the sealing jaw unit of the drive band 130c and the coupling member 113a of the sealing jaw unit 107a of the driven band 131a. From Fig. 6a, it can be seen that no sealing jaw units are engaging the tube-shaped packaging material 10, no coupling members 113a, 113c are within the sealing portion S of the motion path M.

Returning now to Fig. 6b wherein the drive pulley 115a controlling the motion of the coupling members 113b, 1113d and corresponding sealing jaw units is the lower right pulley 115a. This means that the motor controlling the lower right drive shaft controls the movement speed of the sealing jaw units on the bands 130d, 131b in Fig. 6b. Put differently, the driven band 131b of the first sealing unit 110 is driven by the drive band 130d of the second sealing unit 120 via the coupling action CA between the coupling member 113d of the sealing jaw unit of the drive band 130d and the coupling member 113b of the sealing jaw unit of the driven band 131b. From Fig. 6b, it can be seen that two sealing jaw units are engaging the tube-shaped packaging material 10, i.e. one coupling action CA between the two coupling members 113b, 113d is provided within the sealing portion S of the motion path M. This coupling action CA is at a lower end of the sealing portion S of the motion path M. From this follows that the associated motor controls the movement speed of the sealing jaw units to be the same as a movement speed of the tube-shaped packaging material 10.

Correspondingly, in Fig. 6c the pulley 115a controlling the motion of the coupling members 113b, 113d and corresponding sealing jaw units is the lower left pulley 115a. This means that the motor controlling the lower left drive shaft controls the movement speed of the sealing jaw units on the bands 130b, 131d in Fig. 6c. Put differently, the driven band 131d of the second sealing unit 120 is driven by the drive band 130b of the first sealing unit 110 via the coupling action CA between the coupling member 113b of the sealing jaw unit of the drive band 130b and the coupling member 113d of the sealing jaw unit of the driven band 131d. A coupling action CA between the coupling members 113b, 113d is at an upper end of the sealing portion S of the motion path M which means that two sealing jaw units associated with this coupling action CA is in engagement with the moving tube-shaped packaging material 10. From this follows that the associated motor controls the movement speed of the sealing jaw units 107b, 107d to be the same as a movement speed of the tube-shaped packaging material 10. Briefly turning to Figs. 6a and d, it can be seen that no coupling actions CA are shown within the sealing portion S. This means that the sealing jaw units associated with the coupling members 113b, 113d of Fig. 6c are the latest sealing jaw units to engage the moving tube-shaped packaging material 10, i.e. these sealing jaw units may be said to be leading sealing jaw units.

In Fig. 6d, the pulley 115a controlling the motion of the coupling members 113a, 113c and corresponding sealing jaw units is the upper left pulley 115a. This means that the motor controlling the upper left drive shaft controls the movement speed of the sealing jaw units on the bands 130a, 131c in Fig. 6d. Put differently, the driven band 131c of the second sealing unit 120 is driven by the drive band 130a of the first sealing unit 110 via the coupling action CA between the coupling member 113a of the sealing jaw unit of the drive band 130a and the coupling member 113c of the sealing jaw unit of the driven band 131c. One of the coupling actions CA is upstream from the sealing portion S of the motion path M. Briefly turning to Figs. 6a-c, it can be seen that no coupling actions CA are shown in the longitudinal direction L upstream closer from the sealing portion S than the coupling action CA in Fig. 6d. This means that the sealing jaw units associated with the coupling action of Fig. 6d is the next sealing jaw units to engage the moving tube-shaped packaging material 10, i.e. this sealing jaw units may be said to be trailing sealing jaw units.

From the above it can be concluded that the position of sealing jaw units shown in Fig. 5b correspond to the sealing jaw units, i.e. coupling actions CA between the coupling members 113b, 113d, 114b, 114d, of Figs. 6b and 6c.

The views of figures 6a-dare, as mentioned earlier, snapshots at the same point in time. If another snapshot was taken ¼ later from the time it takes for a full revolution around the motion path M, the respective positions of the coupling actions CA would have shifted correspondingly. The coupling action CA and associated sealing jaw units controlled by the lower right drive shaft, Fig. 6b, would substantially correspond to the positions of the coupling action CA of Fig. 6a. The positions of the coupling action CA associated with the other motors would have shifted correspondingly.

The movement speed along the motion path M of the sealing jaw units in engagement with the moving tube-shaped packaging material 10 has in practice to be controlled to be substantially that of the moving tube-shaped packaging material 10. The movement speed along the motion path M of the sealing jaw units not in engagement with the moving tube-shaped packaging material 10 may however be controlled substantially freely to control the pitch P, i.e. the distance between two consecutive transversal seals 20. Hence, the movement speed along the motion path M of the sealing jaw units not in engagement with the moving tube-shaped packaging material 10 may not have to be controlled to be substantially that of the moving tube-shaped packaging material 10.

With further reference to figures 6a-d, each depicted band 130a, 130b, 130c, 130d, 131a, 131b, 131c, 131d is provided with at least one protrusion 133. Each depicted pulley 115a, 115b is provided with at least one recess 135 configured to engage a corresponding protrusion 133 thereby keeping the band in position relative the pulley. Each band 130a, 130b, 130c, 130d, 131a, 131b, 131c, 131d has a round cross-section.

It has been mentioned earlier, but it should be emphasized that the designs illustrated in e.g. Figs. 1-6, are but exemplary designs. The inventive concept is not limited to these designs but is defined by the appended claims.

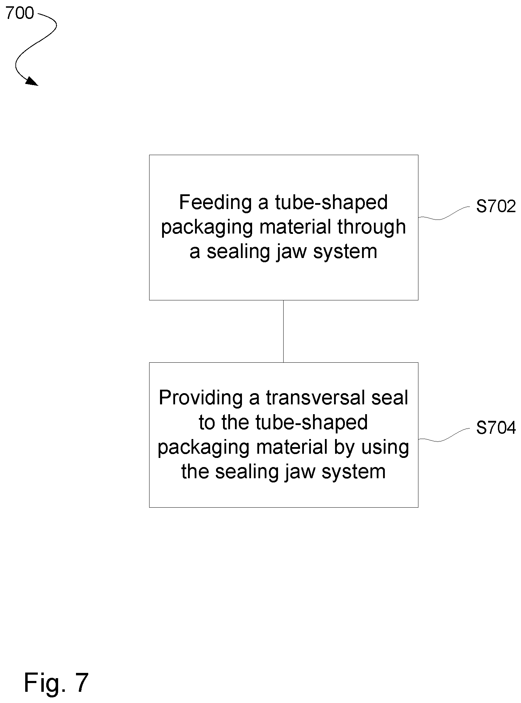

Fig. 7 is a flowchart illustrating a method 700 for forming packaging containers 30 from a tube-shaped packaging material 10 by using a sealing jaw system 100 as discussed in connection with figures 1 to 6. The method 700 comprises a first step S702 in which the tube-shaped packaging material is fed in the longitudinal direction L through the gap G of the sealing jaw system 100. Thereafter, in a second step S704, a transversal seal 20 is provided to the tube-shaped packaging material 10 by driving a sealing jaw 105 of a first sealing jaw unit 107 associated with the first sealing unit 110 to engage the tube-shaped packaging material 10 on a first side thereof. The transversal seal 20 is further provided by driving a sealing jaw 105 of a second sealing jaw unit 107 associated with the second sealing unit 120 to engage the tube-shaped packaging material 10 on a corresponding location of a second side thereof such that the transversal seal 20 is formed between the sealing jaws 105.

The first sealing jaw unit 107 is associated with a pair of drive bands 130a, 130b, 130c, 130d and the second sealing jaw unit 107 is associated with a pair of driven bands 131a, 131b, 131c, 131d. The pair of driven bands 131a, 131b, 131c, 131d are driven by the pair of drive bands 130a, 130b, 130c, 130d associated with the first sealing jaw unit 110 via the coupling members 109 of the first sealing jaw unit 110 and the second sealing jaw unit 120.

Even though illustrated and described in a certain order, other orders may also be used.

From the description above follows that, although various embodiments have been described and shown, the invention is not restricted thereto, but may also be embodied in other ways within the scope of the subject-matter defined in the following claims.

## Claims

1. A sealing jaw system (100) for forming packaging containers (30) from a tube-shaped packaging material (10) moving in a longitudinal direction (L) by providing transversal seals (20) to the tube-shaped packaging material (10), the sealing jaw system (100) comprising:
a first sealing unit (110) and a second, opposite, sealing unit (120), wherein the first sealing unit (110) and the second sealing unit (120) are arranged such that a gap (G) is formed therebetween, the gap (G) extending along a height (H) of the first sealing unit (110) and the second sealing unit (120) and being configured to receive the tube-shaped packaging material (10) while being fed in the longitudinal direction (L), the gap (G) comprising a sealing region (S) in which the sealing jaw system (100) is configured to provide the transversal seals (20), **characterized by**
each sealing unit (110, 120) comprising:
an upper shaft (111, 121) and a lower shaft (112, 122), wherein the upper shaft (111, 121) is driven by an associated motor (180a, 180c) and the lower shaft (112, 122) is driven by an associated motor (180b, 180d);
each shaft (111, 112, 121, 122) comprises a pair of drive pulleys (115a) connected to and configured to corotate with the shaft (111, 112, 121, 122) and three pairs of freely rotatable pulleys (115b) coaxially arranged with the shaft (111, 112, 121, 122);
a first pair of drive bands (130a, 130c) configured to be driven via the upper shaft (111, 121) by the associated motor (180a, 180c) and a second pair of drive bands (130b, 130d) configured to be driven via the lower shaft (112, 122) by the associated motor (180b, 180d) via the respective pair of drive pulleys (115a), wherein each pair of drive bands (130a, 130b, 130c, 130d) is supported by a pair of freely rotatable pulleys (115b) of the other one of the upper and lower shafts (111, 112, 121, 122), wherein each pair of drive bands (130a, 130b, 130c, 130d) comprises at least three sealing jaw units (107a, 107b, 107c, 107d) connected to the respective pair of drive bands (130a, 130b, 130c, 130d) and extending therebetween; and
two pairs of driven bands (131a, 131b, 131c, 131d) supported by a respective pair of freely rotatable pulleys (115b) of each one of the upper shaft (111, 121) and the lower shaft (112, 122), wherein each pair of the two pairs of driven bands (131a, 131b, 131c, 131d) comprises at least three sealing jaw units (107a, 107b, 107c, 107d) connected to the respective pair of driven bands (131a, 131b, 131c, 131d) and extending therebetween,
wherein each sealing jaw unit (107a, 107b, 107c, 107d) comprises a sealing jaw (105a, 105b, 105c, 105d) and a coupling member (113a, 113b, 113c, 113d) for engaging the tube-shaped packaging material (10) to provide the transversal seals (20),
wherein each pair of driven bands (131a, 131b, 131c, 131d) are driven by a pair of drive bands (130a, 130b, 130c, 130d) of the opposite one of the first and second sealing units (110, 120) via a coupling action between a coupling member (113a, 113b, 113c, 113d) of a sealing jaw unit (107a, 107b, 107c, 107d) of the pair of driven bands (131a, 131b, 131c, 131d) and a coupling member (113a, 113b, 113c, 113d) of a sealing jaw unit (107a, 107b, 107c, 107d) of the pair of drive bands (130a, 130b, 130c, 130d).

2. The sealing jaw system (100) according to claim 1, wherein a coupling member (113a, 113b, 113c, 113d) of the sealing jaw unit (107a, 107b, 107c, 107d) of the pair of driven bands (131a, 131b, 131c, 131d) and a coupling member (113a, 113b, 113c, 113d) of the sealing jaw unit (107a, 107b, 107c, 107d) of the pair of drive bands (130a, 130b, 130c, 130d) form a pair of coupling members, wherein the pair of coupling members are configured to connect to each other when entering the gap (G) and wherein the pair of coupling members is configured to disconnect from each other prior to leaving the gap (G) so as to provide the coupling action along a portion of the gap (G), wherein a corresponding pair of trailing coupling members connects to each other prior to the pair of coupling members disconnect from each other.

3. The sealing jaw system (100) according to claim 1 or 2, wherein the sealing region (S) extends along at least a portion of the gap (G).

4. The sealing jaw system (100) according to any one of the preceding claims, wherein the pulleys of each pair of pulleys (115a, 115b) on each shaft (111, 112, 121, 122) are arranged in opposite positions, in opposite directions (D1, D2) of a center point (C) of the shaft (111, 112, 121, 122).

5. The sealing jaw system (100) according to any one of the preceding claims, wherein each pair of driven bands (131a, 131b, 131c, 131d) are driven by a pair of drive bands (130a, 130b, 130c, 130d) of the other one of the first and second sealing units (110, 120) via two coupling actions (CA) between two coupling members (113a, 113b, 113c, 113d) of the first sealing unit (110) and two coupling member (113a, 113b, 113c, 113d) of the second sealing unit (120), respectively.

6. The sealing jaw system (100) according to any one of the preceding claims, wherein
the coupling member (113a, 113b, 113c, 113d) of a sealing jaw unit (107a, 107b, 107c, 107d) associated with a drive band (130a, 130b, 130c, 130d) comprising a female coupling member (114a) and the coupling member (113a, 113b, 113c, 113d) of a sealing jaw unit (107a, 107b, 107c, 107d) associated with a driven band (131a, 131b, 131c, 131d) comprises a male coupling member (114b); or
the coupling member (113a, 113b, 113c, 113d) of a sealing jaw unit (107a, 107b, 107c, 107d) associated with a drive band (130a, 130b, 130c, 130d) comprising a male coupling member (114b) and the coupling member (113a, 113b, 113c, 113d) of a sealing jaw unit (107a, 107b,107c, 107d) associated with a driven band (131a, 131b, 131c, 131d) comprises a female coupling member (114a),
wherein the female coupling member (114a) is configured to receive the corresponding male coupling member (114b) to thereby provide the coupling action.

7. The sealing jaw system (100) according to any one of the preceding claims, wherein each band (130a, 130b, 130c, 130d, 131a, 131b, 131c, 131d) is provided with at least one protrusion (133) and each pulley (115a, 115b) is provided with at least one recess (135) configured to engage a corresponding protrusion (133) thereby keeping the band in position relative the pulley.

8. The sealing jaw system (100) according to any one of the preceding claims, wherein each band (130a, 130b, 130c, 130d, 131a, 131b, 131c, 131d) has a round cross-section.

9. The sealing jaw system (100) according to any one of the preceding claims, wherein the sealing jaw system (100) has exactly four motors (180a, 180b, 180c, 180d) configured to drive the upper shafts (111, 121) and the lower shafts (112, 122) of the first and second sealing units (110, 120).

10. The sealing jaw system (100) according to any one of the preceding claims, wherein each motor (180a, 180b, 180c, 180d) of the sealing jaw system (100) is configured to be independently controlled.

11. The sealing jaw system (100) according to any one of the preceding claims, wherein the sealing jaw system (100) is configured to set a movement speed in the longitudinal direction (L) of a sealing jaw unit (107a, 107b, 107c, 107d), which is present in the sealing region (S), equal to a movement speed in the longitudinal direction (L) of the tube-shaped packaging material (10).

12. The sealing jaw system (100) of any one of the preceding claims, comprising at least one sensor means (195) arranged to detect data relating to a movement of the tube-shaped packaging material (10) in the longitudinal direction (L), and wherein a movement speed of a trailing sealing jaw unit is controlled based at least partly on the detected data by an associated motor (180a, 180b, 180c, 180d).

13. The sealing jaw system (100) of claim 12, wherein the sensor means (195) is arranged to detect register marks (12) on the moving tube-shaped packaging material (10), wherein each detected register mark (12) corresponds to a defined position on a corresponding packaging container (30).

14. The sealing jaw system (100) of claim 12 or 13, comprising at least one control module (190) operatively connected to the sensor means (195) and configured to control the movement speed of the trailing sealing jaw unit, by controlling the associated motor, such that the trailing sealing jaw unit will engage the tube-shaped packaging material (10) at a predetermined or configurable position.

15. A method (700) for forming packaging containers (30) from a tube-shaped packaging material (10) by using a sealing jaw system (100) according to any one of the preceding claims, the method (700) comprising:
feeding (S702) the tube-shaped packaging material (10) in the longitudinal direction (L) through the gap (G) of the sealing jaw system (100); and
providing (S704) a transversal seal (20) to the tube-shaped packaging material (10) by driving a sealing jaw (105a, 105b, 105c, 105d) of a first sealing jaw unit (107a, 107b, 107c, 107d) associated with the first sealing unit (110) to engage the tube-shaped packaging material (10) on a first side thereof and a sealing jaw (105a, 105b, 105c, 105d) of a second sealing jaw unit (107a, 107b, 107c, 107d) associated with the second sealing unit (120) to engage the tube-shaped packaging material (10) on a corresponding location of a second side thereof such that the transversal seal (20) is formed between the sealing jaws (105a, 105b, 105c, 105d),
wherein the first sealing jaw unit (107a, 107b, 107c, 107d) is associated with a pair of drive bands (130a, 130b, 130c, 130d) and the second sealing jaw unit (107a, 107b, 107c, 107d) is associated with a pair of driven bands (131a, 131b, 131c, 131d) which are driven by the pair of drive bands (130a, 130b, 130c, 130d) associated with the first sealing jaw unit (110) via the coupling members (113a, 113b, 113c, 113d) of the first sealing jaw unit (110) and the second sealing jaw unit (120).

## Patentansprüche

1. Siegelbackensystem (100) zum Ausbilden von Verpackungsbehältern (30) aus einem schlauchförmigen Verpackungsmaterial (10), das sich in eine Längsrichtung (L) bewegt, durch Versehen des schlauchförmigen Verpackungsmaterials (10) mit Querversiegelungen (20), wobei das Siegelbackensystem (100) Folgendes umfasst:
eine erste Versiegelungseinheit (110) und eine zweite, entgegengesetzte Versiegelungseinheit (120), wobei die erste Versiegelungseinheit (110) und die zweite Versiegelungseinheit (120) derart angeordnet sind, dass ein Spalt (G) dazwischen ausgebildet ist, wobei sich der Spalt (G) entlang einer Höhe (H) der ersten Versiegelungseinheit (110) und der zweiten Versiegelungseinheit (120) erstreckt und dazu ausgelegt ist, das schlauchförmige Verpackungsmaterial (10) aufzunehmen, während es in die Längsrichtung (L) zugeführt wird, wobei der Spalt (G) einen Versieglungsbereich (S) umfasst, in dem das Siegelbackensystem (100) dazu ausgelegt ist, die Querversiegelungen (20) vorzusehen, **dadurch gekennzeichnet, dass**
jede Versiegelungseinheit (110, 120) Folgendes umfasst: eine obere Welle (111, 121) und eine untere Welle (112, 122), wobei die obere Welle (111, 121) von einem zugehörigen Motor (180a, 180c) angetrieben wird und die untere Welle (112, 122) von einem zugehörigen Motor (180b, 180d) angetrieben wird;
wobei jede Welle (111, 112, 121, 122) ein Paar Antriebsscheiben (115a), das mit der Welle (111, 112, 121, 122) verbunden und dazu ausgelegt ist, sich mit damit zu drehen, und drei Paar frei drehbare Riemenscheiben (115b), die mit der Welle (111, 112, 121, 122) koaxial angeordnet sind, umfasst;
ein erstes Paar Antriebsriemen (130a, 130c), das dazu ausgelegt ist, über die obere Welle (111, 121) durch den zugehörigen Motor (180a, 180c) angetrieben zu werden, und ein zweites Paar Antriebsriemen (130b, 130d), das dazu ausgelegt ist, über die untere Welle (112, 122) vom zugehörigen Motor (180b, 180d) über das jeweilige Paar Antriebsscheiben (115a) angetrieben zu werden, wobei jedes Paar Antriebsriemen (130a, 130b, 130c, 130d) von einem Paar frei drehbarer Riemenscheiben (115b) der anderen der oberen und unteren Welle (111, 112, 121, 122) getragen wird, wobei jedes Paar Antriebsriemen (130a, 130b, 130c, 130d) mindestens drei Siegelbackeneinheiten (107a, 107b, 107c, 107d) umfasst, die mit dem jeweiligen Paar Antriebsriemen (130a, 130b, 130c, 130d) verbunden sind und sich dazwischen erstrecken; und
zwei Paar angetriebene Riemen (131a, 131b, 131c, 131d), die von einem jeweiligen Paar frei drehbarer Riemenscheiben (115b) der oberen Welle (111, 121) und der unteren Welle (112, 122) getragen werden, wobei jedes Paar der zwei Paare angetriebener Riemen (131a, 131b, 131c, 131d) mindestens drei Siegelbackeneinheiten (107a, 107b, 107c, 107d) umfasst, die mit dem jeweiligen Paar angetriebener Riemen (131a, 131b, 131c, 131d) verbunden sind und sich dazwischen erstrecken,
wobei jede Siegelbackeneinheit (107a, 107b, 107c, 107d) eine Siegelbacke (105a, 105b, 105c, 105d) und ein Kopplungselement (113a, 113b, 113c, 113d) für den Eingriff in das schlauchförmige Verpackungsmaterial (10), um die Querversiegelungen (20) vorzusehen, umfasst, wobei jedes Paar angetriebener Riemen (131a, 131b, 131c, 131d) von einem Paar Antriebsriemen (130a, 130b, 130c, 130d) der entgegengesetzten der ersten und zweiten Siegeleinheit (110, 120) über eine Kopplungswirkung zwischen einem Kopplungselement (113a, 113b, 113c, 113d) einer Siegelbackeneinheit (107a, 107b, 107c, 107d) des Paars angetriebener Riemen (131a, 131b, 131c, 131d) und einem Kopplungselement (113a, 113b, 113c, 113d) einer Siegelbackeneinheit (107a, 107b, 107c, 107d) des Paars Antriebsriemen (130a, 130b, 130c, 130d) angetrieben wird.

2. Siegelbackensystem (100) nach Anspruch 1, wobei ein Kopplungselement (113a, 113b, 113c, 113d) der Siegelbackeneinheit (107a, 107b, 107c, 107d) des Paars angetriebener Riemen (131a, 131b, 131c, 131d) und ein Kopplungselement (113a, 113b, 113c, 113d) der Siegelbackeneinheit (107a, 107b, 107c, 107d) des Paars Antriebsriemen (130a, 130b, 130c, 130d) ein Kopplungselementepaar ausbilden, wobei das Kopplungselementepaar dazu ausgelegt ist, sich beim Eintreten in den Spalt (G) miteinander zu verbinden, und wobei das Kopplungselementepaar dazu ausgelegt ist, sich voneinander zu trennen, bevor es aus dem Spalt (G) austritt, um die Kopplungswirkung entlang eines Abschnitts des Spalts (G) vorzusehen, wobei sich ein zugehöriges Paar nachgelagerter Kopplungselemente miteinander verbindet, bevor such das Kopplungselementepaar voneinander trennt.

3. Siegelbackensystem (100) nach Anspruch 1 oder 2, wobei sich der Siegelbereich (S) entlang zumindest eines Abschnitts des Spalts (G) erstreckt.

4. Siegelbackensystem (100) nach einem der vorstehenden Ansprüche, wobei die Riemenscheiben jedes Paars Riemenscheiben (115a, 115b) an jeder Welle (111, 112, 121, 122) in entgegengesetzten Positionen, in entgegengesetzten Richtungen (D1, D2) eines Mittelpunkts (C) der Welle (111, 112, 121, 122) angeordnet sind.

5. Siegelbackensystem (100) nach einem der vorstehenden Ansprüche, wobei jedes Paar angetriebener Riemen (131a, 131b, 131c, 131d) von einem Paar Antriebsriemen (130a, 130b, 130c, 130d) der anderen der ersten und zweiten Siegeleinheit (110, 120) über zwei Kopplungswirkungen (CA) zwischen zwei Kopplungselementen (113a, 113b, 113c, 113d) der ersten Siegeleinheit (110) bzw. zwei Kopplungselementen (113a, 113b, 113c, 113d) der zweiten Siegeleinheit (120) angetrieben wird.

6. Siegelbackensystem (100) nach einem der vorstehenden Ansprüche, wobei
das Kopplungselement (113a, 113b, 113c, 113d) einer einem Antriebsriemen (130a, 130b, 130c, 130d) zugeordneten Siegelbackeneinheit (107a, 107b, 107c, 107d) ein aufnehmendes Kopplungselement (114a) umfasst und das Kopplungselement (113a, 113b, 113c, 113d) einer einem angetriebenen Riemen (131a, 131b, 131c, 131d) zugeordneten Siegelbackeneinheit (107a, 107b, 107c, 107d) ein aufzunehmendes Kopplungselement (114b) umfasst oder
das Kopplungselement (113a, 113b, 113c, 113d) einer einem Antriebsriemen (130a, 130b, 130c, 130d) zugeordneten Siegelbackeneinheit (107a, 107b, 107c, 107d) ein aufzunehmendes Kopplungselement (114b) umfasst und das Kopplungselement (113a, 113b, 113c, 113d) einer einem angetriebenen Riemen (131a, 131b, 131c, 131d) zugeordneten Siegelbackeneinheit (107a, 107b, 107c, 107d) ein aufnehmendes Kopplungselement (114a) umfasst, wobei das aufnehmende Kopplungselement (114a) dazu ausgelegt ist, das zugehörige aufzunehmende Kopplungselement (114b) aufzunehmen, um dadurch die Kopplungswirkung vorzusehen.

7. Siegelbackensystem (100) nach einem der vorstehenden Ansprüche, wobei jeder Riemen (130a, 130b, 130c, 130d, 131a, 131b, 131c, 131d) mit mindestens einem Vorsprung (133) versehen ist und jede Riemenscheibe (115a, 115b) mit mindestens einer Aussparung (135) versehen ist, die dazu ausgelegt ist, mit einem zugehörigen Vorsprung (133) in Eingriff zu gehen, wodurch der Riemen in Bezug zur Riemenscheibe in Position gehalten wird.

8. Siegelbackensystem (100) nach einem der vorstehenden Ansprüche, wobei jeder Riemen (130a, 130b, 130c, 130d, 131a, 131b, 131c, 131d) einen runden Querschnitt aufweist.

9. Siegelbackensystem (100) nach einem der vorstehenden Ansprüche, wobei das Siegelbackensystem (100) genau vier Motoren (180a, 180b, 180c, 180d) aufweist, die dazu ausgelegt sind, die oberen Wellen (111, 121) und die unteren Wellen (112, 122) der ersten und zweiten Siegeleinheit (110, 120) anzutreiben.

10. Siegelbackensystem (100) nach einem der vorstehenden Ansprüche, wobei jeder Motor (180a, 180b, 180c, 180d) des Siegelbackensystems (100) dazu ausgelegt ist, unabhängig steuerbar zu sein.

11. Siegelbackensystem (100) nach einem der vorstehenden Ansprüche, wobei das Siegelbackensystem (100) dazu ausgelegt ist, eine Bewegungsgeschwindigkeit in Längsrichtung (L) einer Siegelbackeneinheit (107a, 107b, 107c, 107d) einzustellen, die im Siegelbereich (S) vorhanden ist, die gleich einer Bewegungsgeschwindigkeit in Längsrichtung (L) des schlauchförmigen Verpackungsmaterials (10) ist.

12. Siegelbackensystem (100) nach einem der vorstehenden Ansprüche, umfassend mindestens eine Sensoreinrichtung (195), die dazu angeordnet ist, Daten zu erfassen, die sich auf eine Bewegung des schlauchförmigen Verpackungsmaterials (10) in Längsrichtung (L) beziehen, und wobei die Bewegungsgeschwindigkeit einer nachgelagerten Siegelbackeneinheit zumindest teilweise basierend auf den erfassten Daten von einem zugehörigen Motor (180a, 180b, 180c, 180d) gesteuert wird.

13. Siegelbackensystem (100) nach Anspruch 12, wobei die Sensoreinrichtung (195) dazu angeordnet ist, Passmarken (12) auf dem sich bewegenden schlauchförmigen Verpackungsmaterial (10) zu erkennen, wobei jede erkannte Passmarke (12) einer definierten Position auf einem zugehörigen Verpackungsbehälter (30) entspricht.

14. Siegelbackensystem (100) nach Anspruch 12 oder 13, umfassend mindestens ein Steuermodul (190), das mit der Sensoreinrichtung (195) wirkverbunden und dazu ausgelegt ist, die Bewegungsgeschwindigkeit der nachgelagerten Siegelbackeneinheit durch Steuern des zugehörigen Motors zu steuern, sodass die nachgelagerte Siegelbackeneinheit an einer festgelegten oder konfigurierbaren Position in das schlauchförmige Verpackungsmaterial (10) eingreift.

15. Verfahren (700) zum Ausbilden von Verpackungsbehältern (30) aus einem schlauchförmigen Verpackungsmaterial (10) unter Verwendung eines Siegelbackensystems (100) nach einem der vorstehenden Ansprüche, wobei das Verfahren (700) Folgendes umfasst:
Zuführen (S702) des schlauchförmigen Verpackungsmaterials (10) in Längsrichtung (L) durch den Spalt (G) des Siegelbackensystems (100) und
Versehen (S704) des schlauchförmigen Verpackungsmaterials (10) mit einer Querversiegelung (20) durch Antreiben einer Siegelbacke (105a, 105b, 105c, 105d) einer ersten Siegelbackeneinheit (107a, 107b, 107c, 107d), die der ersten Siegeleinheit (110) zugeordnet ist, in das schlauchförmige Verpackungsmaterial (10) auf einer ersten Seite davon einzugreifen, und einer Siegelbacke (105a, 105b, 105c, 105d) einer zweiten Siegelbackeneinheit (107a, 107b, 107c, 107d), die der zweiten Siegeleinheit (120) zugeordnet ist, an einer zugehörigen Position einer zweiten Seite dessen in das schlauchförmige Verpackungsmaterial (10) einzugreifen, sodass die Querversiegelung (20) zwischen den Siegelbacken (105a, 105b, 105c, 105d) ausgebildet wird, wobei die erste Siegelbackeneinheit (107a, 107b, 107c, 107d) einem Paar Antriebsriemen (130a, 130b, 130c, 130d) zugeordnet ist und die zweite Siegelbackeneinheit (107a, 107b, 107c, 107d) einem Paar angetriebener Riemen (131a, 131b, 131c, 131d) zugeordnet ist, das von dem Paar Antriebsriemen (130a, 130b, 130c, 130d), das der ersten Siegelbackeneinheit (110) zugeordnet ist, über Kopplungselemente (113a, 113b, 113c, 113d) der ersten Siegelbackeneinheit (110) und der zweiten Siegelbackeneinheit (120) angetrieben wird.

## Revendications

1. Système de mâchoires de scellage (100) pour former des récipients d'emballage (30) à partir d'un matériau d'emballage en forme de tube (10) se déplaçant dans une direction longitudinale (L) en réalisant des joints transversaux (20) sur le matériau d'emballage en forme de tube (10), le système de mâchoires de scellage (100) comprenant :
une première unité de scellage (110) et une seconde unité de scellage (120) opposée, la première unité de scellage (110) et la seconde unité scellage (120) étant agencées de telle sorte qu'un intervalle (G) soit formé entre elles, l'intervalle (G) s'étendant le long d'une hauteur (H) de la première unité de scellage (110) et de la seconde unité de scellage (120) et étant conçu pour recevoir le matériau d'emballage en forme de tube (10) lors de son acheminement dans la direction longitudinale (L), l'intervalle (G) comprenant une région de scellage (S) dans laquelle le système de mâchoires de scellage (100) est conçu pour réaliser les joints transversaux (20), **caractérisé en ce que**
chaque unité de scellage (110, 120) comprend :
un arbre supérieur (111, 121) et un arbre inférieur (112, 122), l'arbre supérieur (111, 121) étant entraîné par un moteur associé (180a, 180c) et l'arbre inférieur (112, 122) étant entraîné par un moteur associé (180b, 180d) ; chaque arbre (111, 112, 121, 122) comprenant une paire de poulies menantes (115a) raccordées à l'arbre (111, 112, 121, 122) et conçues pour tourner avec celui-ci et trois paires de poulies folles (115b) placées coaxialement relativement à l'arbre (111, 112, 121, 122) ;
une première paire de bandes d'entraînement (130a, 130c) conçues pour être entraînées par le biais de l'arbre supérieur (111, 121) par le moteur associé (180a, 180c) et une seconde paire de bandes d'entraînement (130b, 130d) conçues pour être entraînées par le biais de l'arbre inférieur (112, 122) par le moteur associé (180b, 180d) par le biais de la paire respective de poulies menantes (115a), chaque paire de bandes d'entraînement (130a, 130b, 130c, 130d) étant supportées par une paire de poulies folles (115b) de l'autre arbre parmi les arbres supérieur et inférieur (111, 112, 121, 122), chaque paire de bandes d'entraînement (130a, 130b, 130c, 130d) comprenant au moins trois unités de mâchoires de scellage (107a, 107b, 107c, 107d) raccordées à la paire respective de bandes d'entraînement (130a, 130b, 130c, 130d) et s'étendant entre elles ; et
deux paires de bandes entraînées (131a, 131b, 131c, 131d) supportées par une paire respective de poulies folles (115b) de chacun de l'arbre supérieur (111, 121) et de l'arbre inférieur (112, 122), chaque paire des deux paires de bandes entraînées (131a, 131b, 131c, 131d) comprenant au moins trois unités de mâchoires de scellage (107a, 107b, 107c, 107d) raccordées à la paire respective de bandes entraînées (131a, 131b, 131c, 131d) et s'étendant entre elles,
chaque unité de mâchoire de scellage (107a, 107b, 107c, 107d) comprenant une mâchoire de scellage (105a, 105b, 105c, 105d) et un élément d'accouplement (113a, 113b, 113c, 113d) destiné à entrer en prise avec le matériau d'emballage en forme de tube (10) pour réaliser les joints transversaux (20),
chaque paire de bandes entraînées (131a, 131b, 131c, 131d) étant entraînées par une paire de bandes d'entraînement (130a, 130b, 130c, 130d) de l'unité opposée parmi les première et seconde unités de scellage (110, 120) par le biais d'une action d'accouplement entre un élément d'accouplement (113a, 113b, 113c, 113d) d'une unité de mâchoire de scellage (107a, 107b, 107c, 107d) de la paire de bandes entraînées (131a, 131b, 131c, 131d) et un élément d'accouplement (113a, 113b, 113c, 113d) d'une unité de mâchoire de scellage (107a, 107b, 107c, 107d) de la paire de bandes d'entraînement (130a, 130b, 130c, 130d).

2. Système de mâchoires de scellage (100) selon la revendication 1, dans lequel un élément d'accouplement (113a, 113b, 113c, 113d) de l'unité de mâchoire de scellage (107a, 107b, 107c, 107d) de la paire de bandes entraînées (131a, 131b, 131c, 131d) et un élément d'accouplement (113a, 113b, 113c, 113d) de l'unité de mâchoire de scellage (107a, 107b, 107c, 107d) de la paire de bandes d'entraînement (130a, 130b, 130c, 130d) forment une paire d'éléments d'accouplement, dans lequel la paire d'éléments d'accouplement sont conçus pour se raccorder l'un à l'autre lorsqu'ils entrent dans l'intervalle (G) et
dans lequel la paire d'éléments d'accouplement sont conçus pour se séparer l'un de l'autre avant de sortir de l'intervalle (G) de façon à réaliser l'action d'accouplement le long d'une partie de l'intervalle (G), dans lequel une paire correspondante d'éléments d'accouplement postérieurs se raccordent l'un à l'autre avant que la paire d'éléments d'accouplement se séparent l'un de l'autre.

3. Système de mâchoires de scellage (100) selon la revendication 1 ou 2, dans lequel la région de scellage (S) s'étend le long d'au moins une partie de l'intervalle (G).

4. Système de mâchoires de scellage (100) selon l'une quelconque des revendications précédentes, dans lequel les poulies de chaque paire de poulies (115a, 115b) sur chaque arbre (111, 112, 121, 122) sont agencées dans des positions opposées, dans des sens opposés (D1, D2) relativement à un point médian (C) de l'arbre (111, 112, 121, 122).

5. Système de mâchoires de scellage (100) selon l'une quelconque des revendications précédentes, dans lequel chaque paire de bandes entraînées (131a, 131b, 131c, 131d) sont entraînées par une paire de bandes d'entraînement (130a, 130b, 130c, 130d) de l'autre unité parmi les première et seconde unités de scellage (110, 120) par le biais de deux actions d'accouplement (CA) entre deux éléments d'accouplement (113a, 113b, 113c, 113d) de la première unité de scellage (110) et deux éléments d'accouplement (113a, 113b, 113c, 113d) de la seconde unité de scellage (120), respectivement.

6. Système de mâchoires de scellage (100) selon l'une quelconque des revendications précédentes, dans lequel
l'élément d'accouplement (113a, 113b, 113c, 113d) d'une unité de mâchoire de scellage (107a, 107b, 107c, 107d) associée à une bande d'entraînement (130a, 130b, 130c, 130d) comprend un élément d'accouplement femelle (114a) et l'élément d'accouplement (113a, 113b, 113c, 113d) d'une unité de mâchoire de scellage (107a, 107b, 107c, 107d) associée à une bande entraînée (131a, 131b, 131c, 131d) comprend un élément d'accouplement mâle (114b) ; ou
l'élément d'accouplement (113a, 113b, 113c, 113d) d'une unité de mâchoire de scellage (107a, 107b, 107c, 107d) associée à une bande d'entraînement (130a, 130b, 130c, 130d) comprend un élément d'accouplement mâle (114b) et l'élément d'accouplement (113a, 113b, 113c, 113d) d'une unité de mâchoire de scellage (107a, 107b, 107c, 107d) associée à une bande entraînée (131a, 131b, 131c, 131d) comprend un élément d'accouplement femelle (114a),
dans lequel l'élément d'accouplement femelle (114a) est conçu pour recevoir l'élément d'accouplement mâle (114b) correspondant pour réaliser ainsi l'action d'accouplement.

7. Système de mâchoires de scellage (100) selon l'une quelconque des revendications précédentes, dans lequel chaque bande (130a, 130b, 130c, 130d, 131a, 131b, 131c, 131d) est pourvue d'au moins une protubérance (133) et chaque poulie (115a, 115b) est pourvue d'au moins une encoche (135) conçue pour entrer en prise avec une protubérance (133) correspondante de façon à maintenir ainsi la bande en place relativement à la poulie.

8. Système de mâchoires de scellage (100) selon l'une quelconque des revendications précédentes, dans lequel chaque bande (130a, 130b, 130c, 130d, 131a, 131b, 131c, 131d) présente une section transversale ronde.

9. Système de mâchoires de scellage (100) selon l'une quelconque des revendications précédentes, le système de mâchoires de scellage (100) comportant exactement quatre moteurs (180a, 180b, 180c, 180d) conçus pour entraîner les arbres supérieurs (111, 121) et les arbres inférieurs (112, 122) des première et seconde unités de scellage (110, 120).

10. Système de mâchoires de scellage (100) selon l'une quelconque des revendications précédentes, dans lequel chaque moteur (180a, 180b, 180c, 180d) du système de mâchoires de scellage (100) est conçu pour être commandé indépendamment.

11. Système de mâchoires de scellage (100) selon l'une quelconque des revendications précédentes, le système de mâchoires de scellage (100) étant conçu pour régler une vitesse de déplacement dans la direction longitudinale (L) d'une unité de mâchoire de scellage (107a, 107b, 107c, 107d), qui est présente dans la région de scellage (S), de façon à ce qu'elle soit égale à une vitesse de déplacement dans la direction longitudinale (L) du matériau d'emballage en forme de tube (10).

12. Système de mâchoires de scellage (100) selon l'une quelconque des revendications précédentes, comprenant au moins un moyen de détection (195) conçu pour détecter des données relatives à un déplacement du matériau d'emballage en forme de tube (10) dans la direction longitudinale (L), et dans lequel une vitesse de déplacement d'une unité de mâchoire de scellage postérieure est régulée au moins en partie en fonction des données détectées par un moteur associé (180a, 180b, 180c, 180d).

13. Système de mâchoires de scellage (100) selon la revendication 12, dans lequel le moyen de détection (195) est conçu pour détecter des repères (12) sur le matériau d'emballage en forme de tube (10) en mouvement, dans lequel chaque repère (12) détecté correspond à un emplacement défini sur un récipient d'emballage (30) correspondant.

14. Système de mâchoires de scellage (100) selon la revendication 12 ou 13, comprenant au moins un module de commande (190) relié fonctionnellement au moyen de détection (195) et conçu pour réguler la vitesse de déplacement de l'unité de mâchoire de scellage postérieure, en commandant le moteur associé, de telle sorte que l'unité de mâchoire de scellage postérieure entre en prise avec le matériau d'emballage en forme de tube (10) à un emplacement prédéterminé ou configurable.

15. Procédé (700) pour former des récipients d'emballage (30) à partir d'un matériau d'emballage en forme de tube (10) en utilisant un système de mâchoires de scellage (100) selon l'une quelconque des revendications précédentes, le procédé (700) comprenant :
acheminer (S702) le matériau d'emballage en forme de tube (10) dans la direction longitudinale (L) à travers l'intervalle (G) du système de mâchoires de scellage (100) ; et
réaliser (S704) un joint transversal (20) sur le matériau d'emballage en forme de tube (10) en entraînant une mâchoire de scellage (105a, 105b, 105c, 105d) d'une première unité de mâchoire de scellage (107a, 107b, 107c, 107d) associée à la première unité de scellage (110) de façon à ce qu'elle entre en prise avec le matériau d'emballage en forme de tube (10) sur un premier côté de celui-ci et une mâchoire de scellage (105a, 105b, 105c, 105d) d'une seconde unité de mâchoire de scellage (107a, 107b, 107c, 107d) associée à la seconde unité de scellage (120) de façon à ce qu'elle entre en prise avec le matériau d'emballage en forme de tube (10) à un emplacement correspondant d'un second côté de celui-ci de telle sorte que le joint transversal (20) soit formé entre les mâchoires de scellage (105a, 105b, 105c, 105d), dans lequel la première unité de mâchoire de scellage (107a, 107b, 107c, 107d) est associée à une paire de bandes d'entraînement (130a, 130b, 130c, 130d) et la seconde unité de mâchoire de scellage (107a, 107b, 107c, 107d) est associée à une paire de bandes entraînées (131a, 131b, 131c, 131d) qui sont entraînées par la paire de bandes d'entraînement (130a, 130b, 130c, 130d) associées à la première unité de mâchoire de scellage (110) par le biais des éléments d'accouplement (113a, 113b, 113c, 113d) de la première unité de mâchoire de scellage (110) et la seconde unité de mâchoire de scellage (120).
